(19) Europäisches Patentamt
European Patent Office
Office européen des brevets

(11) **EP 4 654 425 A1**

(12) **EUROPÄISCHE PATENTANMELDUNG**

(43) Veröffentlichungstag:
**26.11.2025   Patentblatt 2025/48**

(21) Anmeldenummer: **24177968.5**

(22) Anmeldetag: **24.05.2024**

(51) Internationale Patentklassifikation (IPC):
*H02J 7/00* (2006.01)

(52) Gemeinsame Patentklassifikation (CPC):
**H02J 7/007182; H02J 7/0069**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder:
• **Bellut, Lukas**
**97737 Gemünden am Main (DE)**

• **Fischer, Michael**
**91320 Ebermannstadt (DE)**
• **Katzer, Felix**
**90763 Fürth (DE)**
• **Kraus, Alexander**
**90489 Nürnberg (DE)**
• **Radinger, Hannes**
**90459 Nürnberg (DE)**
• **Schmid, Arthur**
**80337 München (DE)**
• **Schricker, Barbara**
**91058 Erlangen (DE)**

(74) Vertreter: **Siemens Patent Attorneys**
**Postfach 22 16 34**
**80506 München (DE)**

(54) **VERFAHREN ZUM TIEFENTLADEN VON ZUMINDEST EINER BATTERIE MITTELS EINER TIEFENTLADUNGSVORRICHTUNG, COMPUTERPROGRAMMPRODUKT, COMPUTERLESBARES SPEICHERMEDIUM SOWIE TIEFENTLADUNGSVORRICHTUNG**

(57)    Die Erfindung betrifft ein Verfahren zum Tiefentladen (30) von einer Batterie (12), mit den Schritten: Bereitstellen von zumindest der einen Batterie (12); Anlegen eines ersten Entladestroms ($I_1$) an die Batterie (12) für eine erste vorgegebene Zeitdauer ($t_1$) bis zu einem ersten Spannungswert ($V_1$) der Batterie (12); Relaxieren (R) der Batterie (12) durch Unterbrechung (U) des ersten Entladestroms ($I_1$); Bestimmen einer Verlustleistung der Batterie (12) während des Relaxierens (R); Bestimmen eines zweiten Entladestroms ($I_2$) und einer zweiten Zeitdauer ($t_2$) bis zu einem zweiten Spannungswert ($V_2$) für die Batterie (12) in Abhängigkeit von der bestimmten Verlustleistung; und Anlegen des zweiten Entladestroms ($I_2$) an die Batterie (12) für die zweite Zeitdauer ($t_2$). Ferner betrifft die Erfindung ein Computerprogrammprodukt, ein computerlesbares Speichermedium sowie eine Tiefentladungsvorrichtung (10).

FIG 3

EP 4 654 425 A1

**Beschreibung**

Die nachfolgende Erfindung betrifft ein Verfahren zum Tiefentladen von zumindest einer Batterie mittels einer Tiefentladungsvorrichtung gemäß dem geltenden Patentanspruch 1. Ferner betrifft die Erfindung ein Computerprogrammprodukt, ein computerlesbares Speichermedium sowie eine Tiefentladungsvorrichtung.

Das sichere und effiziente Recyceln von Batterien ist ein Thema von wachsender Bedeutung angesichts des stetig zunehmenden Einsatzes von batterieelektrischen Geräten und der wachsenden Zahl an Elektroautos. Unter den verschiedenen Schritten des Recycle-Prozesses spielt die Tiefentladung vor dem eigentlichen Rückgewinnungsprozess aus zwei Gründen eine wichtige Rolle. Zum einen geht von Lithium-Ionen-Batterien bei unsachgemäßer Behandlung eine Gefahr aus. In der Regel werden die Batterien im ersten Schritt des Recyclings in einem mechanischen Bearbeitungsschritt zerkleinert, insbesondere geschreddert. Dabei wird die noch in der Batterie gespeicherte Energie schlagartig frei und stellt somit ein Sicherheitsrisiko dar. Um Zellen aus der Batterie herauszulösen, ist ein mehrstufiger Demontageprozess nötig, der ebenso wie der Transport der Zellen innerhalb der Fabrik größtenteils manuell stattfindet. Ein Risiko für die menschlichen Mitarbeiter ist deshalb unbedingt auszuschließen.

Ferner, obwohl die Batterie möglicherweise nicht mehr ausreichend Leistung für den Second Life-Betrieb bietet, kann sie dennoch über Restladung verfügen. Durch gezielte Entladung der Restenergie kann diese beispielsweise ins Gebäude- und das weiterführende Stromnetz zurückgespeist werden oder im Antriebszwischenkreis zur Verwendung der Prozesse, zum Beispiel kann die Batterieladung für Analysemessungen, eingesetzt werden.

Bei der Tiefentladung wird die verbleibende Energie in den Batterien, wobei Batterien hierbei als Batterien, Batteriemodule oder Batteriesystem angesehen werden können, kontrolliert und sicher entladen. Dieser Prozess soll gewährleisten, dass die Batterien in einem stabilen und sicheren Zustand sind, bevor sie weiterverarbeitet werden. Es verringert das Risiko von unkontrollierten Energieentladungen während des Transports oder der Lagerung und schützt so die Mitarbeiter und Anlagen, die für das Recycling zuständig sind, vor möglichen Gefahren.

Dabei soll der Prozess der Tiefentladung einerseits möglichst schnell erfolgen, um einen hohen Durchsatz der Anlage zu ermöglichen. Andererseits darf bei der Entladung nicht zu viel Verlustleistung in Wärme umgewandelt werden, da die Batterie sonst überhitzt und in Brand geraten kann.

Aus dem Stand der Technik ist hierzu bekannt, um die Tiefentladung möglichst schnell und dennoch sicher durchzuführen, dass die maximale Entladerate, das heißt die maximal spezifizierte kontinuierliche Stromstärke, aus dem Datenblatt der jeweiligen Batterie verwendet wird. Alternativ können auch höhere Stromstärken verwendet werden, was jedoch zu höheren Temperaturentwicklungen und potentiellen Gefahren führen kann. Insbesondere wird dabei die Batterie beziehungsweise die Batterie mit einem konstanten Strom, insbesondere dem Entladestrom, entladen.

Ein Entladen der Batterie über einen externen Widerstand ist auch möglich und führt zu einer Entladung mit einem von der Batteriespannung abhängigen Entladestrom. Je nach Wahl des externen Widerstands kann es hier ebenfalls zu gefährlichen Temperaturentwicklungen kommen.

Aufgabe der vorliegenden Erfindung ist es, ein Verfahren, ein Computerprogrammprodukt, ein computerlesbares Speichermedium sowie eine Tiefentladungsvorrichtung zu schaffen, mittels welchen ein effizienter Entladevorgang einer Batterie, insbesondere ein effizienter Tiefentladevorgang einer Batterie, realisiert werden kann.

Diese Aufgabe wird durch ein Verfahren, ein Computerprogrammprodukt, ein computerlesbares Speichermedium sowie eine Tiefentladungsvorrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Tiefentladen von zumindest einer Batterie mittels einer Tiefentladungsvorrichtung. Es wird die Batterie bereitgestellt. Es folgt das Anlegen eines ersten Entladestroms an die Batterie für eine erste vorgegebene Zeitdauer bis zu einem ersten Spannungswert der Batterie mittels einer elektronischen Recheneinrichtung der Tiefentladungsvorrichtung. Die Batterie wird durch Unterbrechung des ersten Entladestroms mittels der elektronischen Recheneinrichtung relaxiert. Es erfolgt dann ein Bestimmen einer Verlustleistung der Batterie während des Relaxierens mittels der elektronischen Recheneinrichtung. Hierbei wird insbesondere die Verlustleistung bestimmt, welche in dem Entladeschritt zu verzeichnen war. Dies wird insbesondere anhand des Spannungsverlaufs der Relaxation bestimmt. Es wird dann ein zweiter Entladestrom und eine zweite Zeitdauer bis zu einem zweiten Spannungswert für die Batterie in Abhängigkeit von der bestimmten Verlustleistung mittels der elektronischen Recheneinrichtung bestimmt und es erfolgt ein Anlegen des zweiten Entladestroms an die Batterie für die zweite Zeitdauer mittels der elektronischen Recheneinrichtung.

Insbesondere kann somit eine möglichst schnelle Tiefentladung durchgeführt werden, bei der jedoch eine vorgegebene maximale Verlustleistung nicht überschritten wird. Hierzu kann der Tiefentladeprozess entsprechend angepasst werden. Anders als bei der Entladung mit relativ konstanter Stromstärke wird im vorgeschlagenen Verfahren die Entladung in bestimmten Intervallen unterbrochen und die Stromstärke in den jeweiligen Abschnitten variabel eingestellt.

Während der Unterbrechungen selbst fließt kein Entladestrom aus der Batterie, so dass die Spannung hier auf den aktuellen Ruhespannungswert abklingen kann. Aus diesem Abklingverhalten ergibt sich die momentane Überspannung der Batterie.

Insbesondere durch das Unterbrechen des Entladeverfahrens nähert sich in bestimmten Intervallen die Spannung der Ruhespannung an. Der Strom wird dabei in bestimmten Intervallen unterbrochen und die Stromstärke kann abhängig von der ermittelten Verlustleistung eingestellt werden. Im Durchschnitt können so höhere Stromstärken angelegt werden als beim Stand der Technik und so der Tiefentladeprozess beschleunigt werden und insbesondere effizienter gestaltet werden.

Insbesondere erlaubt somit das vorgeschlagene Verfahren der Batterie mit einer im Durchschnitt deutlich höheren Stromstärke als beim Stand der Technik entladen zu werden. Dadurch kann der Prozess beschleunigt werden, was den Durchsatz der Anlage entsprechend erhöht. Durch die hier vorgestellte Verwendung von höheren Stromstärken und den dazwischenliegenden Pausen kann die Anlage somit wirtschaftlicher/effizienter betrieben werden.

Insbesondere die im Datenblatt, falls verfügbar, spezifizierten Stromstärken liegen meist deutlich unter den bei der Tiefentladung verwendbaren Stromstärken, da sie dazu dienen, Schäden an der Batterie zu vermeiden. Da die Batterie nach der Tiefentladung jedoch keine direkte Verwendung mehr findet, können solche Schäden in Kauf genommen werden, sofern keine Gefahren durch die Batterie entstehen. Auch andere Entlademethoden aus dem Stand der Technik verwenden entweder zu geringe Stromstärken oder riskieren eine gefährliche Überhitzung der Batterie.

Wie dargestellt lassen sich diese Gefahren durch eine Beschränkung der maximalen Verlustleistung vermeiden. Durch deren Messung lassen sich die Stromstärken während des Prozessverlaufs anpassen, um so einen möglichst schnellen und trotzdem sicheren Prozess zu gewährleisten.

Insbesondere ist dabei vorgesehen, dass beispielsweise die Batterie im Wesentlichen in einem entleerten Zustand, beispielsweise mit einem State of Charge (Ladezustand - SoC) von 0 Prozent oder geringfügig höher bereitgestellt wird. Es ist auch möglich, dass beispielsweise die Batterie mit einem 100%igen Ladezustand incl. dazwischenliegenden Werten bis auf einen 0 Prozent Ladezustand gebracht werden kann, und dann die Tiefentladung durchgeführt wird. Mit anderen Worten befindet sich die Batterie beim Tiefentladen außerhalb des im Wesentlichen einzusetzenden Spektrums zwischen einem Ladezustandsbereich von 0 Prozent und 100 Prozent. Die Tiefentladung sorgt dafür, dass die Batterie im Wesentlichen vollständig entladen wird.

Beispielsweise kann bei einer Lithium-Ionen-Batterie im Wesentlichen eine entleerte Batterie mit einer Spannung zwischen 2V und 3,2 Volt angesehen werden. An diesem Punkt setzt dann wiederum der Tiefentladeprozess an, welcher die Batterie im Wesentlichen auf 0 Volt Tiefentladen kann.

Insbesondere kann vorgesehen sein, dass auch weitere Tiefentladungszyklen angewendet werden. Mit anderen Worten kann nach dem zweiten Entladestrom und der zweiten Zeitdauer noch ein dritter Entladestrom mit einer dritten Zeitdauer und weitere Entladeströme mit weiteren Zeitdauern angelegt werden. Je nachdem, um welche Batterie es sich handelt und auch in welchem Alterungszustand beziehungsweise Ladezustand sich die Batterie befindet, können somit mehrere Zyklen auf die Batterie einwirken, wodurch eine Tiefentladung der Batterie realisiert werden kann. Insbesondere werden somit analog zum ersten Entladeschritt noch weitere Entladeschritte durchgeführt, bis die Batterie restenergielos ist.

Gemäß einer vorteilhaften Ausgestaltungsform wird die Verlustleistung in Abhängigkeit von einer bestimmten Überspannung während des Relaxierens bestimmt. Insbesondere kann der Unterschied zwischen der momentanen Spannung vor der Unterbrechung des Stroms und der Ruhespannung, auf welche die Batterie während der Unterbrechung abklingen würde, die momentane Überspannung ergeben. Aus der ermittelten Überspannung $\eta$ und der Stromstärke I vor der Unterbrechung der Entladung ergibt sich die momentane Verlustleistung $P_{verlust}$ gemäß:

$$P_{verlust} = \eta \times I \: (1).$$

Die aus der Batterie entnommene, elektrisch nutzbare Leistung ist entsprechend $P_{nutzbar} = (V_0 - \eta) \times I = V_{Klemm} \times I$, mit der Ruhespannung $V_0$ und der Klemmenspannung $V_{Klemm}$. Die Verlustleistung hingegen wird in Wärme umgewandelt und kann nun anhand von verschiedenen Kriterien beschränkt werden. Somit kann detailliert die Verlustleistung bestimmt werden.

Weiterhin vorteilhaft ist, wenn die Überspannung über eine Extrapolation des Relaxierens bestimmt wird. Somit kann die Überspannung über entsprechende Fits eines Standardmodells extrapoliert werden, um zuverlässig die Verlustleistung bestimmen zu können. Dadurch kann insbesondere eine schnelle Tiefentladung durchgeführt werden.

Weiterhin vorteilhaft ist, wenn ein Überspannungsmodell unter Berücksichtigung von Diffusionseffekten der Batterie zum Durchführen der Extrapolation verwendet wird. Mit anderen Worten wird während der Unterbrechung eine Extrapolation durchgeführt, um die Überspannung entsprechend bestimmen zu können. Die Extrapolation ergibt sich meist aus dem Fit eines Standardmodells, welches typischerweise Diffusionseffekte beschreibt an den entsprechenden Messdaten. Die Unterbrechung des Stroms erfolgt also nur so lange, bis ein solcher Fit mit genügend Genauigkeit möglich ist, was insbesondere oftmals in wenigen Sekunden erfolgen kann.

Eine weitere vorteilhafte Ausgestaltungsform sieht vor, dass als erster Entladestrom ein erster Stromwert angelegt wird und als zweiter Entladestrom ein zum ersten Stromwert unterschiedlicher zweiter Entladestrom angelegt wird. Insbesondere kann sich auch die Zeitdauer zwischen der ersten Zeitdauer und der zweiten Zeitdauer entsprechend unterscheiden. Es ist jedoch auch möglich, dass diese im Wesentlichen übereinstimmen, sollte beispielsweise bereits mit dem ersten Entladestrom eine optimale Tiefentladung möglich sein.

Eine weitere vorteilhafte Ausgestaltungsform sieht vor, dass das Verfahren wiederholt wird, bis die Batterie eine Ruhespannung von 0 Volt aufweist. Beispielsweise kann hierzu auch nach dem Durchschreiten der 0 Volt-Grenze beim Tiefentladen eine Negativspannung in der Batterie erzeugt werden, so dass zumindest nach dem Relaxieren die Batterie eine Ruhespannung von 0 Volt aufweist. Somit kann sicher eine Batterie Tiefentladen werden, und beispielsweise nach dem Tiefentladungsprozess sicher einem Recyclingvorgang übergeben werden.

Es hat sich weiterhin als vorteilhaft erwiesen, wenn zusätzlich eine Temperaturveränderung der Batterie während des Tiefentladens vorhergesagt wird und zusätzlich in Abhängigkeit von der Temperaturveränderung zumindest der zweite Entladestrom und zumindest die zweite Zeitdauer bestimmt werden. Insbesondere können hierzu beispielsweise entsprechende kritische Temperaturwerte für die Batterie vorgegeben werden, welche beispielsweise einem Datenblatt der Batterie entnommen werden können. Die Temperaturveränderung kann nun entsprechend vorhergesagt werden anhand der Verlustleistung. Es ist nun vorteilhaft, dass die entsprechenden Entladeströme und die Zeitdauern derart angepasst werden, dass die Batterie einen gewünschten Temperaturwert nicht überschreitet und somit keine Überhitzung der Batterie zu verzeichnen ist. Somit kann ein sicherer Prozess der Tiefentladung bereitgestellt werden.

Ferner hat es sich als vorteilhaft erwiesen, wenn mittels eines thermischen Modells der Batterie die Temperaturveränderung vorhergesagt wird und/oder in Abhängigkeit von einer Wärmekapazität der Batterie die Temperaturveränderung vorhergesagt wird. Insbesondere führt die Entladung und die durch den Verlust erzeugte Wärme, insbesondere abhängig von den Wärmekapazitäten und Wärmetransporteigenschaften der Batterie, zu einer Erhöhung der Temperatur. Übersteigt die Temperatur einen kritischen Wert, kann die Batterie beispielsweise in Brand geraten. Um dies zu vermeiden, darf die durch die Verlustleistung erzeugte Wärmeleistung nicht höher sein als die aus der Batterie maximal abführbare Wärmeleistung. Hierzu können - falls vorhanden - thermische Modelle oder Erfahrungswerte der vorliegenden Batterie genutzt werden, die den Wärmetransport beschreiben. Alternativ oder ergänzend kann die Wärmekapazitäten $C$ der Batterie anhand des Gewichts und der groben stofflichen Zusammensetzung der Batterie abgeschätzt werden. Über $P_{verlust} = C \times dT/dt$ ergibt sich daraus die momentane und ermittelte Temperaturerhöhung der Batterie. Entsprechend kann der Temperaturanstieg während eines Abschnitts des Entladevorgangs bestimmt werden:

$$T(t_n) = T(t_{n-1}) + {}^{P_{Verlust}(t_n)}\!/_C \times \Delta t_n \ (2)$$

Dabei ist $\Delta t_n$ die Dauer des jeweiligen Prozessabschnittes vor der n-ten Unterbrechung, welche zum Zeitpunkt $t_n$ erfolgt. $T(t_n)$ und $P_{verlust}(t_n)$ sind die ermittelten Temperaturen und Verlustleistungen zum Zeitpunkt der n-ten Unterbrechung, wobei $T(t_0)$ die Temperatur der Batterie zu Beginn des Prozesses ist. Aufgrund von Wärmeabgaben an die Umgebung wird die tatsächliche Temperatur der Batterie unterhalb der hieraus bestimmten Werte liegen. Durch eine Begrenzung der Temperatur während des Tiefentladeprozesses - gegebenenfalls auch abhängig von der aktuell erreichten Ruhespannung $T(t_n) < T_{Max}(V_0(t_n))$ - kann somit eine Überhitzung der Batterie verhindert werden, sofern die Wärmeverteilung innerhalb der Batterie genügend schnell funktioniert. Aus der oben gezeigten Gleichung lässt sich dann sukzessive die maximal erlaubte Verlustleistung bei der Unterbrechung errechnen:

$$P_{Verlust,max}(t_n) = \left[\, T_{Max}(V_0(t_n)) - \, T(t_{n-1})\right] \times {}^C\!/_{\Delta t_n}$$

Weiterhin vorteilhaft ist, wenn während des Relaxierens der zumindest einen Batterie eine weitere Batterie mittels des Verfahrens Tiefentladen wird. Insbesondere da während des Relaxierens der Batterie kein Entladestrom zugeführt wird, kann in dieser Zeit eine weitere Batterie entsprechend entladen werden. Somit kann der Durchsatz an Batterien bei der Tiefentladungsvorrichtung erhöht werden, so dass eine Zeitersparnis beim Tiefentladen von einer Vielzahl von Batterien zu verzeichnen ist.

Es hat sich weiterhin als vorteilhaft erwiesen, wenn eine nutzbare Leistung der Batterie in einer Speichereinrichtung gespeichert wird und die gespeicherte Energie zum Durchführen zumindest eines Verfahrensschrittes des Verfahrens verwendet wird. Insbesondere kann somit die Restenergie der Batterie dazu genutzt werden, um beispielsweise den Entladestrom für die Batterie bereitzustellen. Ferner sind auch entsprechende Rechenaufgaben für die elektronische Recheneinrichtung beziehungsweise Analyseaufgaben für die elektronische Recheneinrichtung durch die gespeicherte Energie durchführbar. Alternativ kann auch die nutzbare Leistung in elektrische Energie umgewandelt werden und beispielsweise einem Gebäudenetz oder einem Stromnetz entsprechend zugeführt werden. Somit kann die Restenergie der Batterie bei der Tiefentladung sinnvoll genutzt werden.

Ferner hat es sich als vorteilhaft erwiesen, wenn zumindest der zweite Entladestrom in Abhängigkeit von einer durch die Tiefentladungsvorrichtung nutzbaren Leistung begrenzt wird. Sollte beispielsweise die Tiefentladungsvorrichtung lediglich eine gewisse elektrische Leistung benötigen, um beispielsweise entsprechende Rechenaufgaben durchzuführen, so kann auch der Entladestrom mit der entsprechenden nutzbaren Leistung entsprechend daran angepasst werden. Dies kann jedoch zu einer längeren Tiefentladungszeit führen, jedoch wird die Restenergie dadurch verbessert genutzt.

Weiterhin vorteilhaft ist, wenn der erste Stromwert und die erste Zeitdauer in Abhängigkeit von einem Datenblatt der Batterie, insbesondere in Abhängigkeit von der vorgegebenen Entladungsrate der Batterie, vorgegeben wird. Als Entladungsrate kann insbesondere der Faktor C bezeichnet werden. Dieser beschreibt, wie viel Strom der Batterie in welcher Zeit zu entnehmen ist. Beispielsweise beschreibt der Faktor 1C, dass der komplette Leistungsinhalt der Batterie in einer Stunde entnommen wird. Insbesondere hat es sich dabei als vorteilhaft erwiesen, wenn mit einer Entladungsrate beziehungsweise einem Entladungsstrom mit einer Entladungsrate von 0,5 C bis 2 C, insbesondere mit 1 C, entladen wird. Somit können entsprechende Überhitzungen der Batterie verhindert werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ebenfalls betrifft die Erfindung auch ein computerlesbares Speichermedium mit dem Computerprogrammprodukt.

Ein nochmals weiterer Aspekt der Erfindung betrifft eine Tiefentladungsvorrichtung zum Tiefentladen von zumindest einer Batterie, mit zumindest einer elektronischen Recheneinrichtung, wobei die Tiefentladungsvorrichtung zum Durchführen eines Verfahrens nach dem vorhergehenden Aspekt ausgebildet ist. Insbesondere wird das Verfahren mittels der Tiefentladungsvorrichtung durchgeführt. Insbesondere kann somit die elektronische Recheneinrichtung beispielsweise Steuersignale für die Leistungselektronik erzeugen, welche dann den eigentlichen Entladestrom an die Batterie anlegt und den Tiefentladevorgang physisch durchführt.

Zur Tiefentladungsvorrichtung können beispielsweise zusätzlich zur elektronischen Recheneinrichtung noch entsprechende Kontakteinrichtungen zur Batterie, beispielsweise in Form einer Leistungselektronik, sowie entsprechende Messvorrichtungen zum Strommessen beziehungsweise Spannungsmessen angesehen werden.

Vorteilhafte Ausgestaltungsformen des Verfahrens sind als vorteilhafte Ausgestaltungsformen des Computerprogrammprodukts, des computerlesbaren Speichermediums sowie der Tiefentladungsvorrichtung anzusehen. Die Tiefentladungsvorrichtung weist hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei einem erfindungsgemäßen Verfahren ergeben können und die hierin nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibungen sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Dabei zeigen:

Fig. 1    ein schematisches Blockschaltbild gemäß einer Ausführungsform einer Tiefentladungsvorrichtung;

Fig. 2    ein schematisches Zeit-Spannungs-Diagramm; und

Fig. 3    ein schematisches Zeit-Strom-Diagramm.

In den Figuren sind gleiche oder funktionsgleiche Elemente mit den gleichen Bezugszeichen versehen.

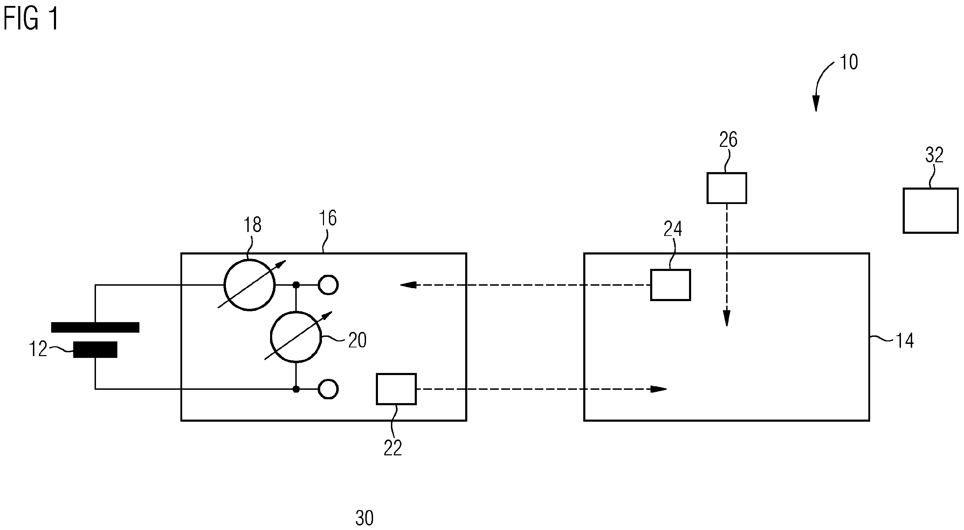

Fig. 1 zeigt ein schematisches Blockschaltbild gemäß einer Ausführungsform einer Tiefentladungsvorrichtung 10 zum Tiefentladen einer Batterie 12. Die Tiefentladungsvorrichtung 10 weist hierzu eine elektronische Recheneinrichtung 14 sowie im vorliegenden Ausführungsbeispiel eine Leistungselektronik 16 mit beispielsweise einer Strommesseinrichtung 18 und einer Spannungsmesseinrichtung 20 auf. Von der Leistungselektronik 16 können Messwerte 22 an die elektronische Recheneinrichtung 14 übertragen werden. Die elektronische Recheneinrichtung 14 kann wiederum Vorgaben 24 an die Leistungselektronik 16 übermitteln. Ferner können Rahmenbedingungen 26, wie beispielsweise eine maximale Temperatur, eine maximale Verlustleistung oder thermische Daten für die Batterie 12, der elektronischen Recheneinrichtung 14 zugeführt werden.

Die elektronische Recheneinrichtung 14 kann dabei insbesondere physisch in die vorhandene Leistungselektronik 16 integriert sein oder auch als separates Gerät mit ihr verbunden werden. Die Leistungselektronik 16 funktioniert dabei wie im Stand der Technik. Sie appliziert eine definierte Stromstärke I an die Batterie 12 und misst deren Spannungsverlauf V. Die Vorgabe der Stromstärke I und die Dauer $\Delta t$, über die diese angelegt wird, erfolgt bei dem vorliegenden Verfahren durch die elektronische Recheneinrichtung 14 und kann bei jeder der beschriebenen Unterbrechungen neu ermittelt vorgegeben werden. Die von der Leistungselektronik 16 gemessenen Strom- und Spannungsverläufe werden an die elektronische Recheneinrichtung 14 übermittelt. Zudem hinterlegt beispielsweise ein Nutzer die Vorgaben 24 in der elektronischen Recheneinrichtung 14, die die Rahmenbedingungen 26 des Verfahrens anhand der später beschriebenen Kriterien definieren. Aus diesen Daten ermittelt die elektronische Recheneinrichtung 14 auf die nachfolgend beschriebene Weise dann jeweils die Vorgaben für die Stromstärken I und die Dauer des nächsten Prozessschrittes, die an die Leistungselektronik 16 übermittelt werden.

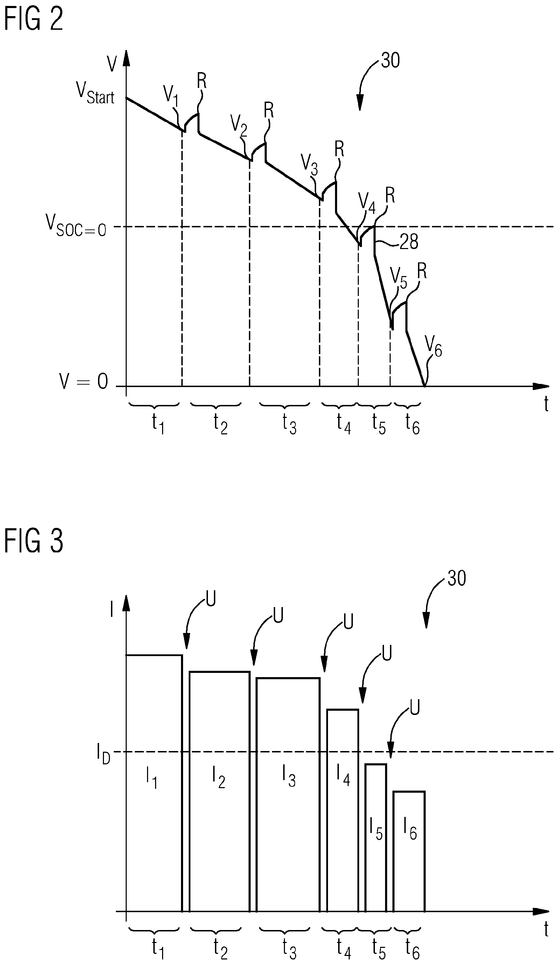

Fig. 2 zeigt ein schematisches Zeit t-Spannungs V-Diagramm. Hierbei ist insbesondere ein Spannungsverlauf 28 während eines Tiefentladens 30 gezeigt. Dabei ist insbesondere eine Startspannung $V_{start}$ sowie eine Leerspannung $V_{SoC=0}$ gezeigt. Ferner ist eine 0 Volt-Linie V=0 gezeigt.

Die Fig. 3 zeigt im Wesentlichen den gleichen Zeitverlauf wie die Fig. 2, jedoch ist in der Fig. 3 die Zeit t und die Stromstärke I schematisch aufgezeigt. Dabei ist insbesondere ein Datenblatt-Stromwert $I_D$ gezeigt.

Die Fig. 3 zeigt insbesondere sechs Entladezyklen, um die Batterie 12 entsprechend zu Tiefentladen.

Dabei zeigen die Figuren insbesondere, dass die Batterie 12 entsprechend bereitgestellt wird. Diese kann beispielsweise mit der Leerspannung $V_{SoC=0}$ oder auch mit einer Startspannung $V_{start}$ bereitgestellt werden. Es erfolgt dann das Anlegen eines ersten Entladestroms $I_1$ an die Batterie 12 für eine erste vorgegebene Zeitdauer $t_1$ bis zu einem ersten Spannungswert $V_1$ der Batterie 12 mittels der elektronischen Recheneinrichtung 14. Es erfolgt dann das Relaxieren R der Batterie 12 durch Unterbrechung U des ersten Entladestroms $I_1$ mittels der elektronischen Rechen-einrichtung 14. Es wird dann eine Verlustleistung der Batterie 12 während des Relaxierens R mittels der elektronischen Recheneinrichtung 14 bestimmt. Es erfolgt dann das Bestimmen eines zweiten Entladestroms $I_2$ und einer zweiten Zeitdauer $t_2$ bis zu einem zweiten Spannungswert $V_2$ für die Batterie 12 in Abhängigkeit von der bestimmten Verlustleistung mittels der elektronischen Recheneinrichtung 14 und das Anlegen beziehungsweise Vorgeben des zweiten Entladestroms $I_2$ an die Batterie 12 für die zweite Zeitdauer $t_2$ mittels der elektronischen Recheneinrichtung 14. Die Entladeströme werden dabei physisch insbesondere über die Leistungselektronik 16 angelegt.

Im vorliegenden Ausführungsbeispiel sind insbesondere noch weitere Entlade-/Tiefentlade-Zyklen gezeigt, welche über weitere Stromstärken $I_3$ bis $I_6$ und über weitere Zeitdauern $t_3$ bis $t_6$ gezeigt sind. Ferner sind wiederum im Spannungsdiagramm entsprechende weitere Spannungen $V_3$ - $V_6$ gezeigt, wobei insbesondere die sechste Spannung $V_6$ einer Spannung von 0 Volt entspricht und an dieser Stelle der Tiefentladungsvorgang entsprechend abgebrochen werden kann.

Dabei kann insbesondere vorgesehen sein, dass die Verlustleistung in Abhängigkeit von einer bestimmten Überspannung während des Relaxierens R bestimmt wird. Ferner kann die Überspannung über eine Extrapolation des Relaxierens R bestimmt werden. Ferner kann auch ein Überspannungsmodell unter Berücksichtigung von Diffusionseffekten der Batterie 12 zum Durchführen der Extrapolation verwendet werden.

Insbesondere kann dabei vorgesehen sein, dass als erster Entladestrom $I_1$ ein erster Stromwert angelegt wird und als zweiter Entladestrom $I_2$ ein zum ersten Stromwert unterschiedlicher zweiter Stromwert angelegt wird. Hierzu können auch die Zeitdauern $t_1$ bis $t_6$ entsprechend unterschiedlich sein. Es kann jedoch auch in einer Ausgestaltungsform vorkommen, je nach entsprechendem Typ der Batterie 12 oder auch dem Alterungszustand der Batterie 12, dass die Entladeströme $I_1$ bis $I_6$ und die Zeitdauern $t_1$ bis $t_6$ im Wesentlichen gleich ausfallen.

Weiterhin kann vorgesehen sein, dass zusätzlich eine Temperaturveränderung der Batterie 12 während des Tiefentladens 30 vorhergesagt wird und zusätzlich in Abhängigkeit von der Temperaturveränderung zumindest der zweite Entladestrom $I_2$ und zumindest die zweite Zeitdauer $t_2$ sowie auch die weiteren Entladeströme $I_3$ bis $I_6$ und die weiteren Zeitdauern $t_3$ bis $t_6$ bestimmt werden.

Dabei kann insbesondere mittels eines thermischen Modells der Batterie 12 die Temperaturveränderung vorhergesagt werden und/oder in Abhängigkeit von einer Wärmekapazität der Batterie 12 die Temperaturveränderung vorhergesagt werden.

Weiterhin kann vorgesehen sein, dass während des Relaxierens R der zumindest einen Batterie 12 eine weitere Batterie mittels des Verfahrens Tiefentladen wird. Ebenfalls kann auch eine nutzbare Lesitung in einer Speichereinrichtung 32 gespeichert werden und zum Durchführen zumindest eines Verfahrensschrittes des Verfahrens verwendet werden.

Ebenfalls kann vorgesehen sein, dass zumindest der zweite Entladestrom $I_2$ in Abhängigkeit von einer durch die Tiefentladungsvorrichtung 10 nutzbaren Leistung begrenzt wird.

Weiterhin kann auch der erste Stromwert und die erste Zeitdauer $t_1$ in Abhängigkeit eines Datenblatts der Batterie 12, insbesondere in Abhängigkeit von einer vorgegebenen Ladungsrate der Batterie 12, vorgegeben werden.

Das Verfahren schlägt somit eine möglichst schnelle Tiefentladung 30 vor, bei der jedoch eine vorgegebene maximale Verlustleistung nicht überschritten werden soll. Hierzu wird der Tiefentladeprozess entsprechend angepasst. Anders als bei einer Entladung mit (relativ) konstanter Stromstärke gemäß dem Stand der Technik wird im vorgeschlagenen Verfahren die Entladung in bestimmten Intervallen unterbrochen und die Stromstärke in den jeweiligen Abschnitten variabel eingestellt.

Während der Unterbrechungen U selbst fließt kein Strom aus der Batterie 12, so dass die Spannung hier auf den aktuellen Ruhespannungswert abklingen kann. Aus diesem Abklingverhalten ergibt sich die momentane Überspannung der Batterie 12.

Dadurch, dass der Strom in bestimmten Intervallen unterbrochen wird und die Stromstärke abhängig von der ermittelten Verlustleistung eingestellt werden kann ergeben sich im Durchschnitt so höhere Stromstärken als beim Stand der Technik, wodurch der Tiefentladeprozess beschleunigt werden kann.

Der Unterschied zwischen der momentanen Spannung V vor der Unterbrechung des Stroms, und der Ruhespannung V0, auf welche die Batterie 12 während der Unterbrechung U abklingen würde, ergibt die momentane Überspannung $\eta$. Die Extrapolation ergibt sich meist aus dem Fit eines Standard-Modells (welches typischerweise Diffusionseffekte beschreibt) an die Messdaten. Die Unterbrechung U des Stroms muss also nur so lange erfolgen, bis ein solcher Fit mit genügend Genauigkeit möglich ist, meist sind dies wenige Sekunden.

Aus der ermittelten Überspannung $\eta$ und der Stromstärke I vor der Unterbrechung U der Entladung ergibt sich die momentane Verlustleistung $P_{Verlust}$ gemäß:

$$(1) \qquad P_{Verlust} = \eta \times I$$

Die aus der Batterie entnommene, elektrisch nutzbare Leistung ist entsprechend $P_{Nutzbar} = (V_0 - \eta) \times I$. Die Verlustleistung hingegen wird in Wärme umgewandelt und kann nun anhand von verschiedenen Kriterien beschränkt werden, beispielsweise in Bezug auf die nachfolgend erwähnten Themen.

Die durch Verluste erzeugte Wärme führt, abhängig von den Wärmekapazitäten und Wärmetransporteigenschaften der Batterie 12, zu einer Erhöhung der Temperatur. Übersteigt die Temperatur einen kritischen Wert, kann die Batterie 12 in Brand geraten. Um dies zu vermeiden, darf die durch die Verlustleistung erzeugte Wärmeleistung nicht höher sein als die aus der Batterie 12 maximal abführbare Wärmeleistung. Hierzu können - falls vorhanden - thermische Modelle oder Erfahrungswerte der vorliegenden Batterie 12 genutzt werden, die den Wärmetransport beschreiben. Alternativ kann die Wärmekapazität $C$ der Batterie 12 anhand des Gewichts und der groben stofflichen Zusammensetzung der Batterie 12 abgeschätzt werden. Über $P_{Verlust} = C \times dT/dt$ ergibt sich daraus die (momentane und gemittelte) Temperaturerhöhung der Batterie 12. Entsprechend kann der Temperaturanstieg während eines Abschnitts des Entladevorgangs bestimmt werden mit:

$$(2) \qquad \mathrm{T}(t_n) = \mathrm{T}(t_{n-1}) + \frac{\mathrm{P_{Verlust}}(t_n)}{C} \times \varDelta t_n$$

Dabei ist $\varDelta t_n$ die Dauer des jeweiligen Prozessabschnittes vor der *n*-ten Unterbrechung U, welche zum Zeitpunkt $t_n$ erfolgt. $\mathrm{T}(t_n)$ und $\mathrm{P_{Verlust}}(t_n)$ sind die ermittelten Temperaturen und Verlustleistungen zum Zeitpunkt der *n*-ten Unterbrechung U, wobei $\mathrm{T}(t_0)$ die Temperatur der Batterie 12 zu Beginn des Prozesses ist. Aufgrund von Wärmeabgaben an die Umgebung wird die tatsächliche Temperatur der Batterie 12 unterhalb der hieraus bestimmten Werte liegen.

Durch eine Begrenzung der Temperatur während des Tiefentladeprozesses - ggf. auch abhängig von der aktuell erreichten Ruhespannung, $\mathrm{T}(t_n) < \mathrm{T_{Max}}(V_0(t_n))$ - kann somit eine Überhitzung der Batterie 12 verhindert werden, sofern die Wärmeverteilung innerhalb der Batterie 12 genügend schnell funktioniert. Aus (2) lässt sich dann sukzessiv die maximal erlaubte Verlustleitung bei jeder Unterbrechung U errechnen:

$$\mathrm{P_{Verlust,max}}(t_n) = \left[\, \mathrm{T_{Max}}(V_0(t_n)) - \mathrm{T}(t_{n-1}) \right] \times \frac{C}{\varDelta t_n}$$

Falls die Energie der Batterie 12 nutzbar gemacht werden soll, darf die Verlustleistung einen bestimmten Wert nicht überschreiten, um die Tiefentladungsvorrichtung 10 sinnvoll betreiben zu können. Hierzu kann ein Absolutwert für die maximale Verlustleistung angenommen werden, oder das erlaubte Verhältnis zwischen $\mathrm{P_{Verlust}}$ und $\mathrm{P_{Nutzbar}}$ kann beschränkt werden.

Der Tiefentladungsprozess wird nun folgendermaßen geregelt: Sollte die ermittelte Verlustleistung unterhalb des (einer der zuvor beschriebenen Kriterien) erlaubten Wertes $\mathrm{P_{Verlust,max}}$ liegen, so wird die Stromstärke nach der Unterbrechung U höher gewählt als zuvor, um den Prozess zu beschleunigen. Ist die Verlustleistung jedoch höher als erlaubt, so muss die Stromstärke niedriger gewählt werden. Der genaue Wert, um den die Stromstärke angepasst werden kann, ergibt sich aus der Bedingung:

$$(3) \;\; \eta(\mathrm{I}) \times \mathrm{I} < \mathrm{P_{Verlust,max}}$$

Dabei hat $\eta(\mathrm{I})$ im Allgemeinen eine komplexe Abhängigkeit von der der Stromstärke, aufgrund der Überlagerung von ohmschen Verhalten, Diffusion und Ladungsdurchtritt, welche sich jeweils mit dem Ladezustand und der Temperatur der Batterie 12 ändert. Für hinreichend kleine Änderungen der Stromstärke kann eine lineare Abhängigkeit angenommen werden:

$$\eta(\mathrm{I}) = \mathrm{R} \times \mathrm{I},$$

wobei sich der effektive Widerstand R aus der momentan ermittelten Überspannung und Stromstärke ergibt. Aus (3) ergibt sich dann entsprechend:

$$(4) \;\; \mathrm{I} < \sqrt{\frac{\mathrm{P_{Verlust,max}}}{\mathrm{R}}}$$

Bei jeder Unterbrechung U können Verlustleistung bzw. Überspannung und/oder Widerstand entsprechend neu ermittelt werden, um so die Stromstärke für den nächsten Prozessabschnitt anzupassen. Durch hinreichend viele Unterbrechungen U und wiederholtem Nachjustieren der Stromstärke kann somit die Prozessdauer der Tiefentladung 30 optimiert werden. Bei hinreichend langen Unterbrechungen U könnten die pausierten Kanäle zudem während der Unterbrechungsdauer anderweitig genutzt werden, beispielsweise um eine andere Batterie zu entladen, bis diese wiederum eine Unterbrechung U erfährt. So könnte der Gesamtdurchsatz der Tiefentladungsvorrichtung 10 weiter erhöht werden.

Bezugszeichenliste

10    Tiefentladungsvorrichtung
12    Batterie
14    elektronische Recheneinrichtung
16    Leistungselektronik

18 Strommessgerät
20 Spannungsmessgerät
22 Messwerte
24 Vorgaben
26 Rahmenbedingungen
28 Spannungsverlauf
30 Tiefentladung
32 Speichereinrichtung
V Spannung
t Zeit
I Entladestrom
R Relaxieren
U Unterbrechung

**Patentansprüche**

1. Verfahren zum Tiefentladen (30) von zumindest einer Batterie (12) mittels einer Tiefentladungsvorrichtung (10), mit den Schritten:

   - Bereitstellen von zumindest der einen Batterie (12);
   - Anlegen eines ersten Entladestroms ($I_1$) an die Batterie (12) für eine erste vorgegebene Zeitdauer ($t_1$) bis zu einem ersten Spannungswert ($V_1$) der Batterie (12) mittels der Tiefentladungsvorrichtung (10);
   - Relaxieren (R) der Batterie (12) durch Unterbrechung (U) des ersten Entladestroms ($I_1$) mittels der Tiefentladungsvorrichtung (10);
   - Bestimmen einer Verlustleistung der Batterie (12) während des Relaxierens (R) mittels einer elektronischen Recheneinrichtung (14) der Tiefentladungsvorrichtung (10);
   - Bestimmen eines zweiten Entladestroms ($I_2$) und einer zweiten Zeitdauer ($t_2$) bis zu einem zweiten Spannungswert ($V_2$) für die Batterie (12) in Abhängigkeit von der bestimmten Verlustleistung mittels der elektronischen Recheneinrichtung (14); und
   - Anlegen des zweiten Entladestroms ($I_2$) an die Batterie (12) für die zweite Zeitdauer ($t_2$) mittels Tiefentladungsvorrichtung (10).

2. Verfahren nach Anspruch 1, **dadurch gekennzeichnet, dass** die Verlustleistung in Abhängigkeit von einer bestimmten Überspannung während des Relaxierens (R) bestimmt wird.

3. Verfahren nach Anspruch 2, **dadurch gekennzeichnet, dass** die Überspannung über eine Extrapolation des Relaxierens (R) bestimmt wird.

4. Verfahren nach Anspruch 3, **dadurch gekennzeichnet, dass** ein Überspannungsmodell unter Berücksichtigung von Diffusionseffekten der Batterie (12) zum Durchführen der Extrapolation verwendet wird.

5. Verfahren nach einem der vorhergehenden Ansprüche, **dadurch gekennzeichnet, dass** als erster Entladestrom ($I_1$) ein erster Stromwert angelegt wird und als zweiter Entladestrom ($I_2$) ein zum ersten Entladestrom ($I_1$) unterschiedlicher zweiter Stromwert angelegt wird.

6. Verfahren nach einem der vorhergehenden Ansprüche, **dadurch gekennzeichnet, dass** das Verfahren wiederholt wird, bis die Batterie (12) eine Ruhespannung von 0 Volt aufweist.

7. Verfahren nach einem der vorhergehenden Ansprüche, **dadurch gekennzeichnet, dass** zusätzlich eine Temperaturveränderung der Batterie (12) während des Tiefentladens (30) vorhergesagt wird und zusätzlich in Abhängigkeit von der Temperaturveränderung zumindest der zweite Entladestrom ($I_2$) und zumindest die zweite Zeitdauer ($t_2$) bestimmt werden.

8. Verfahren nach Anspruch 7, **dadurch gekennzeichnet, dass** mittels eines thermischen Modells der Batterie (12) die Temperaturveränderung vorhergesagt wird und/oder in Abhängigkeit von einer Wärmekapazität der Batterie (12) die Temperaturveränderung vorhergesagt wird.

9. Verfahren nach einem der vorhergehenden Ansprüche, **dadurch gekennzeichnet, dass** während des Relaxierens

(R) der zumindest einen Batterie (12) eine weitere Batterie mittels des Verfahrens Tiefentladen wird.

10. Verfahren nach einem der vorhergehenden Ansprüche, **dadurch gekennzeichnet, dass** eine nutzbare Leistung der Batterie 12 in einer Speichereinrichtung (32) gespeichert wird und zum Durchführen zumindest eines Verfahrensschrittes des Verfahrens verwendet wird.

11. Verfahren nach einem der vorhergehenden Ansprüche, **dadurch gekennzeichnet, dass** zumindest der zweite Entladestrom ($I_2$) in Abhängigkeit von einer durch die Tiefentladungsvorrichtung (10) nutzbaren Leistung begrenzt wird.

12. Verfahren nach einem der vorhergehenden Ansprüche, **dadurch gekennzeichnet, dass** ein erster Stromwert für den ersten Entladestrom ($I_1$) und die erste Zeitdauer ($t_1$) in Abhängigkeit eines Datenblatts der Batterie (12), insbesondere in Abhängigkeit von einer vorgegebene Entladungsrate der Batterie (12), vorgegeben wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Tiefentladungsvorrichtung (10) zum Tiefentladen (30) von zumindest einer Batterie (12), mit zumindest einer elektronischen Recheneinrichtung (14), wobei die Tiefentladungsvorrichtung (10) zum Durchführen eines Verfahrens nach einem der Ansprüche 1 bis 12 ausgebildet ist.

FIG 1

FIG 2

FIG 3

**EUROPÄISCHER RECHERCHENBERICHT**

Nummer der Anmeldung

EP 24 17 7968

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2023/134947 A1 (BOSCH GMBH ROBERT [DE]) 20. Juli 2023 (2023-07-20) * Seite 14, zweiter und dritter Paragraph; Abbildung 5 * ----- | 1-15 | INV. H02J7/00 |

RECHERCHIERTE SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 5. Dezember 2024 | Meyer, Andreas Hans |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 17 7968

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-12-2024

| Im Recherchenbericht angeführtes Patentdokument | Datum der Veröffentlichung | Mitglied(er) der Patentfamilie | Datum der Veröffentlichung |
|---|---|---|---|
| WO 2023134947 A1 | 20-07-2023 | KEINE | |

Für nähere Einzelheiten zu diesem Anhang : siehe Amtsblatt des Europäischen Patentamts, Nr.12/82